# EUROPÄISCHE PATENTSCHRIFT

(11) **EP 3 452 518 B1**
(45) Veröffentlichungstag und Bekanntmachung des Hinweises auf die Patenterteilung: **15.04.2020**
(21) Anmeldenummer: 17708703.8
(22) Anmeldetag: 20.02.2017
(51) Int. Cl.: C08C 19/00, B60C 1/00, C08F 299/00, C08L 19/00

(54) **KAUTSCHUKMISCHUNG, VULKANISAT DER KAUTSCHUKMISCHUNG UND FAHRZEUGREIFEN**
RUBBER COMPOSITION, VULCANISATE OF THE RUBBER COMPOSITION AND TIRE
COMPOSITION DE CAOUTCHOUC, VULCANISATE DE LA COMPOSITION DE CAOUTCHOUC ET PNEUMATIQUE

(30) Priorität: 04.05.2016 DE 102016207744
(43) Veröffentlichungstag der Anmeldung: 13.03.2019
(73) Patentinhaber: Continental Reifen Deutschland GmbH, 30165 Hannover (DE)
(72) Erfinder: HERZOG, Katharina, 31177 Harsum (DE); RECKER, Carla, 30167 Hannover (DE); GROSSE, Julia, 30926 Seelze (DE); PRUSS, Noa, 30916 Isernhagen (DE)
(74) Vertreter: Finger, Karsten
(86) Internationale Anmeldenummer: PCT/EP2017/053722
(87) Internationale Veröffentlichungsnummer: WO 2017/190859

(56) Entgegenhaltungen:
- EP-A1- 2 987 813
- WO-A1-03/031484
- WO-A2-2007/047943

## Beschreibung

Die Erfindung betrifft eine Kautschukmischung, insbesondere für Fahrzeugreifen, ein Vulkanisat der Kautschukmischung und einen Fahrzeugreifen.

Die Kautschukzusammensetzungen der einzelnen Bauteile von Fahrzeugreifen, insbesondere die Zusammensetzung des Laufstreifens, bestimmen in hohem Maße deren Fahreigenschaften.
Zur Beeinflussung der Mischungs- und Vulkanisateigenschaften werden den Mischungen unterschiedlichste Zuschlagstoffe beigemischt und/oder es werden spezielle Polymere verwendet. Als Zuschlagstoffe seien beispielhaft an dieser Stelle Füllstoffe (z. B. Ruß), Weichmacher, Alterungsschutzmittel und Vernetzungssysteme aus Schwefel, Beschleuniger und Aktivator genannt.

Durch die Vernetzung der Polymerketten mit Hilfe des Vulkanisationssystems wird ein dreidimensionales weitmaschiges chemisches Netzwerk geschaffen, wodurch die Kautschukmischung je nach Vernetzungsdichte z. B. härter und rissfester, insbesondere durch einen erhöhten Weiterreißwiderstand, wird.
Bei der Vernetzung bilden sich sogenannte Netzknoten, an denen die Polymerketten aneinander geknüpft werden, und zwar meist über Brücken, wie z. B. Schwefelbrücken bei der Schwefelvernetzung von Dienkautschuken.
Die Netzknoten sind üblicherweise statistisch verteilt, da wesentlich mehr Vernetzungsstellen (d.h. Doppelbindungen von Dienkautschuken, insbesondere bei der Schwefelvernetzung) verfügbar sind, als sich bei der Vulkanisation Netzknoten bilden. Durch die statistische Verteilung können wesentliche physikalische Eigenschaften von Vulkanisaten nur bedingt verbessert werden. Insbesondere Eigenschaften bzw. Prädiktoren für den Zielkonflikt aus Rollwiderstand und Nassgriff sowie das Abriebverhalten sind hierbei von Interesse, um den steigenden Anforderungen an Fahrzeugreifen enthaltend die Vulkanisate, zu genügen.

Die WO2008/076875A1 beschreibt eine Zusammensetzung bestehend aus a) einem unvernetzten elastomeren Polymer und b) einem sulfidischen Modifikator der Formel AS-Y-Zₘ, wobei Y definiert ist durch C₁₂-C₁₀₀ Aralkyl, Aryl, Alkyl oder Dialkylether und zusätzlich optional substituiert sein kann. Die in der WO2008/076875A1 offenbarten Vulkanisate weisen in Gegenwart von Kieselsäure als Füllstoff einen niedrigeren Rollwiderstand auf.

Der Erfindung liegt daher nun auf Basis des Standes der Technik die Aufgabe zu Grunde, eine schwefelvernetzbare Kautschukmischung, insbesondere für Fahrzeugreifen, bereitzustellen, die sich durch eine weitere Verbesserung im Zielkonflikt aus Rollwiderstandsverhalten und den Nassgriffeigenschaften auszeichnet, wobei die weiteren Eigenschaften, insbesondere das Abriebverhalten auf gleichem Niveau verbleiben oder sogar ebenfalls verbessert wird.

Gelöst wird diese Aufgabe durch eine Kautschukmischung, die wenigstens die folgenden Bestandteile enthält:
- Wenigstens einen Füllstoff und
- 10 bis 100 phr zumindest eines Polymers A gemäß folgender Formel I): 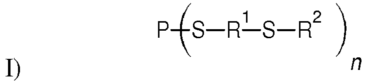 wobei
   S ein Schwefelatom ist, und
   P eine Polymerkette ist, die erhältlich ist durch anionische Polymerisation wenigstens eines konjugierten Diens und gegebenenfalls einer oder mehrerer vinylaromatischer Verbindungen und die gegebenenfalls kettenendmodifiziert ist,
   R¹ unabhängig ausgewählt ist aus C₁-C₁₁-Alkyl, C₆-C₁₁-Aryl, C₇-C₁₁-Aralkyl und C₂-C₁₁-Dialkylether, bevorzugt C₁-C₁₁-Alkyl, besonders bevorzugt C₁-C₈-Alkyl,
   R² unabhängig ausgewählt ist aus H, C₁-C₁₁-Alkyl, C₆-C₁₁-Aryl, C₇-C₁₁-Aralkyl, C₂-C₁₁-Dialkylether und -SiR³R⁴R⁵ ist, worin R³, R⁴ und R⁵ unabhängig ausgewählt sind aus H, C₁-C₁₆-Alkyl, C₆-C₁₆-Aryl und C₇-C₁₆-Aralkyl, und R² bevorzugt unabhängig ausgewählt ist aus H und -SiR³R⁴R⁵, worin R³, R⁴ und R⁵ unabhängig ausgewählt sind aus H, C₁-C₁₆-Alkyl, C₆-C₁₆-Aryl und C₇-C₁₆-Aralkyl, und n eine ganze Zahl ist, ausgewählt aus 1 bis 200, bevorzugt 1 bis 100, besonders bevorzugt 1 bis 50,
   wobei die Gruppe(n) -S-R¹-S-R² an das Rückgrat der Polymerkette P gebunden sind.

Überraschenderweise wurde gefunden, dass durch zumindest ein Polymer A gemäß obiger Ausführung in Kombination mit wenigstens einem Füllstoff der Zielkonflikt aus Rollwiderstand und Nassgriff verbessert werden und zwar bei gleichem oder verbessertem Abriebverhalten.
Gleichzeitig verbleiben die übrigen Reifeneigenschaften auf einem annähernd gleich hohen Niveau oder werden sogar verbessert, wobei insbesondere die Reißeigenschaften der Kautschukmischung auf einem annähernd gleich hohen Niveau verbleiben oder sogar verbessert werden.

Eine weitere Aufgabe, die der vorliegenden Erfindung zugrunde liegt, besteht darin einen Fahrzeugreifen bereitzustellen, der eine Verbesserung gegenüber dem Stand der Technik im Hinblick auf den Zielkonflikt aus Rollwiderstand und Nassgriff aufweist, wobei das Abriebverhalten zumindest auf gleichem Niveau verbleibt oder ebenfalls verbessert wird. Gelöst wird die Aufgabe dadurch, dass der Fahrzeugreifen wenigstens in einem Bauteil wenigstens ein Vulkanisat wenigstens einer schwefelvernetzbaren Kautschukmischung mit oben genannten bzw. unten näher ausgeführten Merkmalen aufweist.
Fahrzeugreifen, die die erfindungsgemäße Kautschukmischung wenigstens in einem Bauteil, bevorzugt wenigstens im Laufstreifen enthalten, weisen einen verbesserten, und damit verringerten, Rollwiderstand bei gleichzeitiger Verbesserung im Zielkonflikt aus Rollwiderstand und Nassgriff.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.
Die erfindungsgemäße Kautschukmischung ist ferner auch für andere Bauteile von Fahrzeugreifen geeignet, wie z. B. insbesondere Seitenwand, Hornprofil, sowie innere Reifenbauteile. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden werden die Bestandteile der erfindungsgemäßen schwefelvernetzbaren Kautschukmischung näher beschrieben. Sämtliche Ausführungen gelten auch für den erfindungsgemäßen Fahrzeugreifen, der die erfindungsgemäße Kautschukmischung wenigstens in einem Bauteil aufweist.

Es ist erfindungswesentlich, dass die Kautschukmischung 10 bis 100 phr zumindest eines Polymers A gemäß oben dargestellter Formel I) enthält.
Unter "Polymer A" wird im Rahmen der vorliegenden Erfindung ein Polymer der oben beschriebenen Formel I) mit den oben beschriebenen Merkmalen inklusive der unten genannten Ausführungsformen und Merkmale verstanden.

Das Polymer A wird mittels eines Verfahrens hergestellt, welches die folgenden Schritte umfasst:
(i) anionisches Polymerisieren wenigstens eines konjugierten Diens und gegebenenfalls einer oder mehrerer vinylaromatischer Verbindungen zum Erhalt einer anionischen lebenden Polymerkette,
(ii) Abbrechen der Polymerisation und
(iii) Umsetzen der Polymerkette mit einer Verbindung der folgenden Formel II) in Gegenwart eines Radikalstarters: 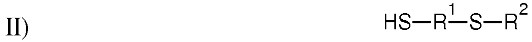 worin
   S ein Schwefelatom ist,
   R¹ unabhängig ausgewählt ist aus C₁-C₁₁-Alkyl, C₆-C₁₁-Aryl, C₇-C₁₁-Aralkyl und C₂-C₁₁-Dialkylether, bevorzugt C₁-C₁₁-Alkyl, besonders bevorzugt C₁-C₈-Alkyl,
   und R² unabhängig ausgewählt ist aus H, C₁-C₁₁-Alkyl, C₆-C₁₁-Aryl, C₇-C₁₁-Aralkyl, C₂-C₁₁-Dialkylether und -SiR³R⁴R⁵ ist, worin R³, R⁴ und R⁵ unabhängig ausgewählt sind aus H, C₁-C₁₆-Alkyl, C₆-C₁₆-Aryl und C₇-C₁₆-Aralkyl, und R² bevorzugt unabhängig ausgewählt ist aus H und -SiR³R⁴R⁵, worin R³, R⁴ und R⁵ unabhängig ausgewählt sind aus H, C₁-C₁₆-Alkyl, C₆-C₁₆-Aryl und C₇-C₁₆-Aralkyl.

Die Polymerkette P des Polymers ist erhältlich durch anionische Polymerisation wenigstens eines konjugierten Diens und gegebenenfalls einer oder mehrerer vinylaromatischer Verbindungen, gewöhnlich in Gegenwart eines Initiators. Nach Abbruch der Polymerisation wird die Polymerkette P in Gegenwart eines Radikalstarters mit einer Verbindung der Formel II) umgesetzt. Dadurch wird das Rückgrat der Polymerkette durch mindestens eine Gruppe der Formel -S-R¹-S-R² modifiziert. Erfindungsgemäß wird ein Polymer in der Kautschukmischung verwendet, dessen Polymerkette durch bis zu 200 Gruppen der Formel -S-R¹-S-R² am Polymerrückgrat modifiziert ist. Die Modifizierung des Rückgrats des Polymers bedeutet dabei eine Modifizierung einer Wiederholeinheit (Monomereinheit) der Polymerkette, die nicht eine terminale (endständige) Wiederholeinheit ist und wobei sich die Wiederholeinheit aus einem konjugierten Dien ableitet. Beispielsweise entspricht die Modifizierung des Rückgrats einer Polymerkette aus den Monomereinheiten M₁ bis M₁₀₀₀ einer Modifizierung an einem oder mehreren der Monomereinheiten M₂ bis M₉₉₉. Eine Modifizierung an den Monomereinheiten M₁ und/oder M₁₀₀₀ ist im Sinne der vorliegenden Erfindung keine Modifizierung des Rückgrats der Polymerkette, sondern eine Modifizierung des Polymerkettenendes (Kettenendmodifizierung). Eine Wiederholeinheit kann mit maximal einer Gruppe der Formel -S-R¹-S-R² modifiziert sein.

Das Polymer A ist somit ein entlang der Ketten modifiziertes Polymer. Eine derartige Modifizierung entlang der Polymerkette wird auch als "backbone modification" bezeichnet. Die Modifizierung erfolgt bevorzugt an vinylischen Doppelbindungen, wie sie beispielsweise bei Polybutadien oder Styrol-Butadien-Copolymeren vorhanden sind, bzw. je nach eingestellter Mikrostruktur sein können.
In der erfindungsgemäßen Kautschukmischung werden die Polymere A (sowie Polymere ggf. weiterer enthaltender Dienkautschuke) bei der Vulkanisation an zugänglichen Doppelbindungen der Polymerketten schwefelvernetzt. Hierbei können die an R² gebundenen Schwefelatome der Seitengruppen -S-R¹-S-R² nach erfolgter Abspaltung der Gruppe R² zusätzlich zum vorhandenen Schwefelvulkanisationssystem (s. unten) in die Vulkanisation eingreifen und lokale Netzknoten bilden.
Dem Fachmann ist klar, dass sich die Angabe zu dem Polymer gemäß obiger Formel I) auf den Anfangszustand der Bestandteile der schwefelvernetzbaren Kautschukmischung bezieht und während des Mischvorgangs - mit den sonstigen üblichen Bestandteilen einer Kautschukmischung für Fahrzeugreifen - und/oder der Vulkanisation die Schutzgruppen abgespalten werden und die jeweiligen Schwefelatome chemisch reagieren.
Durch gezielte Einstellung der beteiligten Monomere kann somit auch die Architektur dieser zusätzlichen Netzknoten(-möglichkeiten) beeinflusst werden. Hierbei spielt insbesondere die Abfolge der Monomere mit vinylischen Doppelbindungen eine Rolle, da hier der Modifikator II) über eine Thiol-En-Reaktion bevorzugt an diese anknüpft.
Es wurde gefunden, dass Vulkanisate der erfindungsgemäßen Kautschukmischung im Vergleich zum Stand der Technik eine Verbesserung im Zielkonflikt aus Rollwiderstands- und Nassgriffindikatoren aufweisen. Gleichzeitig verbleibt das Abriebverhalten auf einem vergleichbaren Niveau oder wird sogar ebenfalls verbessert.

Die Kettenenden der Polymerkette P können optional, vollständig oder teilweise, durch funktionelle Gruppen modifiziert sein. Kettenendmodifizierende Gruppen, deren Erzeugung in einem Polymer während der Polymerisation, bspw. durch funktionale Initiatoren, und/oder deren Anbindung an das Kettenende eines durch anionische Polymerisation hergestellten Polymers sind dem Fachmann bekannt und werden beispielsweise in WO 2014/040640, WO 2014/040639, WO2015/010710,
WO 2015/086039 und WO 2015/055252 sowie in der Europäischen Patentanmeldung Nr. 15 181 760.8 beschrieben, die hier durch Verweis eingeführt werden. Die optionale Kettenendmodifizierung der Polymerkette P kann ggf. auch durch eine Gruppe -S-R¹-S-R² erfolgen, wobei diese Gruppe(n) dann aber nicht bei der Bestimmung des Parameterwertes n in Formel I) berücksichtigt werden.
Exemplarische konjugierte Diene, die zur Herstellung der Polymerkette P geeignet sind, schließen ein: 1,3-Butadien, 2-(C₁-C₅-Alkyl)-1,3-butadien, insbesondere Isopren (2-Methyl-1,3-butadien), 2,3-Dimethyl-1,3-butadien, 1,3-Pentadien, 2,4-Hexadien, 1,3-Hexadien, 1,3-Heptadien, 1,3-Octadien, 2-Methyl-2,4-pentadien, Cyclopentadien und 1,3-Cyclooctadien. Eine Mischung aus zwei oder mehreren konjugierten Dienen kann verwendet werden. Bevorzugte konjugierte Diene schließen ein: 1,3-Butadien und Isopren. In einer Ausführungsform ist das konjugierte Dien 1,3-Butadien.

Das wenigstens eine konjugierte Dien wird zur Herstellung der Polymerkette P vorzugsweise in einer Gesamtmenge von 30 bis 100 Gew.-%, bezogen auf die Gesamtmenge an Monomeren, verwendet.

Die optional zur Herstellung der Polymerkette P verwendete vinylaromatische Verbindung schließt monovinylaromatische Verbindungen, d.h. Verbindungen mit nur einer an eine aromatische Gruppe gebundenen Vinylgruppe, und di-, tri- etc. vinylaromatische Verbindungen ein, die zwei oder mehr an eine aromatische Gruppe gebundene Vinylgruppen aufweisen. Exemplarische vinylaromatische Verbindungen, die optional mit dem wenigstens einen Dien zur Herstellung der Polymerkette P verwendet werden können, schließen ein: Styrol, C₁-C₄-Alkyl-substituiertes Styrol, insbesondere 2-Methylstyrol, 3-Methylstyrol, 4-Methylstyrol, 2,4-Dimethylstyrol, 2,4,6-Trimethylstyrol, α-Methylstyrol, 2,4-Diisopropylstyrol und 4-tert-Butylstyrol, Stilben, Vinylbenzyldimethylamin, (4-Vinylbenzyl)dimethylaminoethylether, N,N-Dimethylaminoethylstyrol, tert-Butoxystyrol, Vinylpyridin sowie divinylaromatische Verbindungen, insbesondere 1,2-Divinylbenzol, 1,3-Divinylbenzol und 1,4-Divinylbenzol. Eine Mischung aus zwei oder mehreren davon kann verwendet werden. Eine bevorzugt verwendete vinylaromatische Verbindung ist eine monovinylaromatische Verbindung, besonders bevorzugt Styrol.
Die vinylaromatischen Verbindungen können generell in einer Gesamtmenge von bis zu 70 Gew.-% verwendet werden, insbesondere 5 bis 70 Gew.-%, vorzugsweise bis zu 60 Gew.-% und noch mehr bevorzugt bis zu 50 Gew.-%, bezogen auf die Gesamtmenge an Monomeren, mit der Maßgabe, dass di-, tri- und höhervinylaromatische Verbindungen in einer Gesamtmenge von nicht mehr als 1 Gew.-% verwendet werden, bezogen auf die Gesamtmenge an Monomeren. Obwohl es keine allgemeinen Beschränkungen hinsichtlich des Anteils an Styrol gibt, der zur Herstellung der Polymerkette verwendet wird, stellt Styrol typischerweise 5 bis 70 Gew.-%, vorzugsweise 5 bis 60 Gew.-% und besonders bevorzugt 5 bis 50 Gew.-% der Gesamtmenge an Monomeren dar. Eine Menge von weniger als 5 Gew.-% Styrol kann zu einem verschlechterten Gleichgewicht von Rollwiderstand, Nassrutschfestigkeit und Abriebbeständigkeit sowie zu reduzierten mechanischen Festigkeitseigenschaften führen, während eine Menge von mehr als 70 Gew.-% erhöhte Hystereseverluste zur Folge haben kann.

Andere Comonomere als das konjugierte Dien und die vinylaromatische Verbindung können in der Herstellung der Polymerkette P verwendet werden und schließen Acrylmonomere wie Acrylnitril, Acrylate, z.B. Acrylsäure, Methylacrylat, Ethylacrylat, Propylacrylat und Butylacrylat, und Methacrylate, z.B. Methylmethacrylat, Ethylmethacrylat, Propylmethacrylat und Butylmethacrylat, ein. Die Gesamtmenge an anderen Monomeren als das konjugierte Dien und die vinylaromatische Verbindung ist vorzugsweise nicht größer als 10 Gew.-%, besonders bevorzugt nicht größer als 5 Gew.-% aller Monomere. In einer besonders bevorzugten Ausführungsform werden neben dem konjugierten Dien und ggf. der vinylaromatischen Verbindung keine anderen Comonomere verwendet.

In einer besonders bevorzugten Ausführungsform ist die Polymerkette P erhältlich durch statistische Copolymerisation von 1,3-Butadien als konjugiertes Dien mit Styrol als vinylaromatischer Verbindung, wobei vorzugsweise Styrol in einer Menge von 5 bis 70 Gew.-% verwendet wird.

Die Polymerkette P kann ein statistisches oder Block-Copolymer sein. Die Polymerkette P kann auch Polymerabschnitte unterschiedlicher Mikrostrukturen mit jeweils statistischer Styrolverteilung aufweisen.

Vorzugsweise 40 Gew.-% oder mehr der Styrol-Wiederholeinheiten sind einzeln in der Polymerkette eingebaut, und 10 Gew.-% oder weniger sind "Blöcke" von acht oder mehr Styroleinheiten, die aufeinanderfolgend eingebaut sind. Ein Polymer außerhalb dieser Grenzen kann zu erhöhten Hystereseverlusten führen. Die Länge der aufeinanderfolgend eingebauten vinylaromatischen Einheiten, inkl. der Styrol-Wiederholeinheiten, kann durch ein Ozonolyse-Gelpermeationschromatographieverfahren bestimmt werden, das von Tanaka et al. entwickelt wurde (Polymer, Vol. 22, 1721-1723 (1981)).

Die Polymerisation des wenigstens einen konjugierten Diens und ggf. einer oder mehrerer vinylaromatischer Verbindungen zum Erhalt der Polymerkette P wird gewöhnlich in Gegenwart eines oder mehrerer Initiatoren durchgeführt. Geeignete Initiatoren schließen Organometallverbindungen ein, speziell Organolithiumverbindungen, bspw. Ethyllithium, Propyllithium, n-Butyllithium, sek-Butyllithium, tert-Butyllithium, Phenyllithium, Hexyllithium, 1,4-Dilithio-n-butan, 1,3-Di(2-lithio-2-hexyl)benzol und 1,3-Di(2-lithio-2-hexyl)benzol und 1,3-Di(2-lithio-2-propyl)benzol. Darunter sind n-Butyllithium und sek-Butyllithium bevorzugt. Die Menge des Initiators wird auf Basis der zu polymerisierenden Monomermenge und des Zielmolekulargewichts der Polymerkette P gewählt. Die Gesamtmenge an Initiator beträgt typischerweise 0,05 bis 20 mmol, vorzugsweise 0,1 bis 10 mmol auf 100 g Monomere (Gesamtmenge an polymerisierbaren Monomeren).
Zur Monomermischung oder Polymerisationsreaktion kann weiterhin eine polare Koordinatorverbindung hinzugegeben werden, um die Mikrostruktur des konjugierten Dienanteils, d.h. den Gehalt an Vinylbindungen, oder die Zusammensetzungsverteilung einer ggf. vorhandenen vinylaromatischen Verbindung in der Polymerkette P einzustellen. Es können zwei oder mehr polare Koordinatorverbindungen gleichzeitig verwendet werden. Polare Koordinatorverbindungen sind generell Lewis-Basen, und geeignete exemplarische Lewis-Basen schließen ein: Etherverbindungen wie beispielsweise Diethylether, Di-n-butylether, Ethylenglykoldiethylether, Ethylenglykoldibutylether, Diethylenglykoldimethylether, Propylenglykoldimethylether, Propylenglykoldiethylether, Propylenglykoldibutylether, (C₁-C₈-Alkyl)tetrahydrofurylether (inkl. Methyltetrahydrofurylether, Ethyltetrahydrofurylether, Propyltetrahydrofurylether, Butyltetrahydrofurylether, Hexyltetrahydrofurylether und Octyltetrahydrofurylether), Tetrahydrofuran, 2,2-(Bistetrahydrofurfuryl)propan, Bistetrahydrofurfurylformal, Methylether des Tetrahydrofurfurylalkohols, Ethylether des Tetrahydrofurfurylalkohols, Butylether des Tetrahydrofurfurylalkohols, α-Methoxytetrahydrofuran, Dimethoxybenzol und Dimethoxyethan, sowie tertiäre Amine wie Triethylamin, Pyridin, N,N,N',N'-Tetramethylethylendiamin, Dipiperidinoethan, Methylether des N,N-Diethylethanolamins, Ethylether des N,N-Diethylethanolamin, N,N-Diethylethanolamin und Dimethyl-N,N-tetrahydrofurfurylamin. Beispiele für bevorzugte polare Koordinatorverbindungen werden in WO 2009/148932 beschrieben, das hier durch Verweis eingeführt wird.

Die polare Koordinatorverbindung wird typischerweise in einem Molverhältnis von polarer Koordinatorverbindung zu Initiatorverbindung von 0,012:1 bis 10:1, vorzugsweise 0,1:1 bis 8:1 und besonders bevorzugt 0,25:1 bis ca. 6:1 hinzugegeben.

Das zur Herstellung der Polymerkette verwendete Polymerisationsverfahren wird vorzugsweise als Lösungspolymerisation durchgeführt, in der das gebildete Polymer im Wesentlichen löslich in der Reaktionsmischung ist, oder als Suspensions/Dreiphasen(Slurry-)polymerisation, in der das gebildete Polymer im Wesentlichen unlöslich in der Reaktionsmischung ist. Vorzugsweise wird die Polymerkette P in einer Lösungspolymerisation erhalten. Als Lösungsmittel wird in herkömmlicher Weise ein Kohlenwasserstoff verwendet, der den Initiator, die Koordinatorverbindung oder die aktive Polymerkette nicht deaktiviert. Zwei oder mehr Lösungsmittel können in Kombination verwendet werden. Exemplarische Lösungsmittel schließen aliphatische und aromatische Lösungsmittel ein. Spezielle Beispiele sind (einschließlich aller Konstitutionsisomere): Propan, Butan, Pentan, Hexan, Heptan, Octan, Buten, Propen, Penten, Benzol, Toluol, Ethylbenzol und Xylol. Lösungspolymerisation wird üblicherweise bei einem Druck von nicht mehr als 10 MPa (absolut), vorzugsweise in einem Temperaturbereich von 0 bis 120°C durchgeführt. Die Polymerisation kann diskontinuierlich, kontinuierlich oder halbkontinuierlich durchgeführt werden.

Im elastomeren Polymer der Formel I) ist R¹ unabhängig ausgewählt ist aus C₁-C₁₁-Alkyl, C₆-C₁₁-Aryl, C₇-C₁₁-Aralkyl und C₂-C₁₁-Dialkylether, bevorzugt C₁-C₁₁-Alkyl, besonders bevorzugt C₁-C₈-Alkyl. Ausgewählte Beispiele für R¹ sind Ethyliden [-(CH₂)₂-], Propyliden [-(CH₂)₃-] und Hexyliden [-(CH₂)₆-].

R² ist unabhängig ausgewählt aus H, C₁-C₁₁-Alkyl, C₆-C₁₁-Aryl, C₇-C₁₁-Aralkyl, C₂-C₁₁-Dialkylether und -SiR³R⁴R⁵ ist, worin R³, R⁴ und R⁵ unabhängig ausgewählt sind aus H, C₁-C₁₆-Alkyl, C₆-C₁₆-Aryl und C₇-C₁₆-Aralkyl. R² ist bevorzugt unabhängig ausgewählt aus H und -SiR³R⁴R⁵, worin R³, R⁴ und R⁵ unabhängig ausgewählt sind aus H, C₁-C₁₆-Alkyl, C₆-C₁₆-Aryl und C₇-C₁₆-Aralkyl. Ausgewählte Beispiele für R² sind -SiMe₃, -SiEt₃, -SiPr₃, -SiBu₃, -SiMe₂Et, -SiMe₂Pr, -SiMe₂Bu, -SiMe₂(C₆H₁₃) und -SiMe₂(C₈H₁₇), wobei Pr für n-Propyl oder i-Propyl steht und Bu für n-Butyl, t-Butyl oder i-Butyl steht.

Ausgewählte Beispiele für die Teilstruktur -S-R¹-S-R² in Formel I) und Formel II) sind -S-(CH₂)₂-S-SiMe₃, -S-(CH₂)₂-S-SiMe₂Et, -S-(CH₂)₂-S-SiMe₂Pr, -S-(CH₂)₂-S-SiMe₂Bu, -S-(CH₂)₂-S-SiEt₃, -S-(CH₂)₃-S-SiMe₃, -S-(CH₂)₃-S-SiMe₂Et, -S-(CH₂)₃-S-SiMe₂Pr, -S-(CH₂)₃-S-SiMe₂Bu, -S-(CH₂)₃-S-SiEt₃, -S-(CH₂)₆-S-SiMe₃, -S-(CH₂)₆-S-SiMe₂Et, -S-(CH₂)₆-S-SiMe₂Pr, -S-(CH₂)₆-S-SiMe₂Bu und -S-(CH₂)₆-S-SiEt₃.
n eine ganze Zahl ist, ausgewählt aus 1 bis 200, bevorzugt 1 bis 100, besonders bevorzugt 1 bis 50.

Schritt (i) des Verfahrens entspricht der oben beschriebenen Herstellung der Polymerkette P, und für Einzelheiten und Bedingungen sowie bevorzugte Ausführungsformen wird auf die oben beschriebene Herstellung der Polymerkette P verwiesen.

Die anionische Polymerisation des Schrittes (i) und damit die erhaltene anionische lebende Polymerkette wird in einem Schritt (ii) abgebrochen. Dieser Polymerisations- bzw. Kettenabbruch kann in herkömmlich bekannter Weise mittels einer Protonenquelle oder eines funktionellen Reagens erfolgen. Ein Mittel zum Kettenabbruch enthält zumindest ein aktives Wasserstoffatom, das mit dem anionischen Polymerkettenende reagieren kann und dieses protoniert. Ein einzelnes oder zwei oder mehr Kettenabbruchmittel in Kombination können verwendet werden. Geeignete Kettenabbruchmittel schließen Wasser

(Wasserdampf), Alkohole, Amine, Mercaptane und organische Säuren ein, bevorzugt Alkohole und besonders bevorzugt C₁-C₄-Alkohole, bevorzugt Methanol und Ethanol und besonders bevorzugt Methanol. Anstelle von oder zusammen mit dem Kettenabbruchmittel können auch ein oder mehrere, das Kettenende modifizierende Verbindungen eingesetzt werden, um die Polymerkette an den Kettenenden zu modifizieren. Entsprechende Verbindungen sind dem Fachmann aus dem Stand der Technik bekannt, und es wird exemplarisch auf die Offenbarung der bereits oben genannten Dokumente WO 2014/040640, WO 2014/040639, WO 2015/086039 und WO 2015/055252 verwiesen.

Nach dem Kettenabbruch in Schritt (ii) wird das erhaltene, an den Kettenenden deaktivierte Polymer mit einer Verbindung der Formel II) in Gegenwart eines Radikalstarters umgesetzt. Die Reaktion führt zur Modifizierung des Rückgrats der Polymerkette und damit zu einem elastomeren Polymer der Formel I). Die Modifizierung in Schritt (iii) wird typischerweise direkt nach Schritt (ii) durchgeführt. Optional kann jedoch nach dem Schritt (ii) das Lösungsmittel entfernt und/oder ausgetauscht werden, bevor die Modifizierung in Schritt (iii) durchgeführt wird.

Die Menge der in Schritt (iii) zugesetzten Verbindung(en) der Formel II) hängt von der Länge der Polymerkette P und dem gewünschten Index n in Formel I) ab. Typischerweise beträgt diese Menge 0,01 bis 10 Gew.-% bezogen auf die Gesamtmenge aller Monomere, vorzugsweise 0,025 bis 7,5 Gew.-% und besonders bevorzugt 0,05 bis 5 Gew.-%.

Der Radikalstarter wird typischerweise in einer Menge von 1 bis 25 mol%, vorzugsweise 2 bis 20 mol% zugesetzt, bezogen auf die Menge der eingesetzten Verbindung(en) der Formel II). Die Reaktion in Schritt (iii) wird im Allgemeinen bei einer Temperatur von 50 bis 180°C, vorzugsweise bei 60 bis 150°C durchgeführt.

Der in Schritt (iii) verwendete Radikalstarter kann beispielsweise aus Peroxiden, Azoinitiatoren und Photoinitiatoren ausgewählt werden, und zwei oder mehrere Radikalstarter können in Kombination eingesetzt werden. Bevorzugt wird ein Peroxid als Radikalstarter verwendet, bspw. Lauroylperoxid, Dicumylperoxid, Benzoylperoxid, tert-Butylperoxid oder 1,1-Di(tert.-butylperoxy)-3,3,5-trimethylcyclohexan. Ein Beispiel für einen Azoinitiator ist 2,2'-Azobis(2-methylpropionitril).

Die im Schritt (iii) erhaltene Reaktionsmischung wird typischerweise durch herkömmliche Verfahren aufgearbeitet, wodurch das Polymer A erhalten wird. Aufarbeitung bedeutet die Entfernung von Lösungsmittel durch Destillation oder Vakuumverdampfung. Hierbei können als Teil des Polymers A weitere Polymere sowie übliche Bestandteile bzw. Produkte von Nebenreaktionen der gewünschten Polymerisation als Teil der Polymerzusammensetzung enthalten sein, die im Polymerisationsprozess gebildet werden, aber kein elastomeres Polymer gemäß Formel I) der Erfindung darstellen.
Die Mengenangaben 10 bis 100 phr des Polymers A -bzw. die bevorzugten Ausführungsformen- beziehen sich somit auf die Gesamtmenge an enthaltenem Polymer A inklusive als übliche Verunreinigungen enthaltene Komponenten ausgewählt aus (i) Komponenten, die als Ergebnis der Polymerisation zum Erhalt der Polymerkette P erhalten werden oder zu der Polymerisation hinzugegeben werden, und (ii) Komponenten, die nach Entfernung von Lösungsmittel aus der Polymerisation zurückbleiben.
Gemäß einer vorteilhaften Ausführungsform der Erfindung enthält die Kautschukmischung 100 phr des Polymers A, d.h. sie enthält keinen weiteren Kautschuk und alle anderen Gewichtsangaben beziehen sich auf 100 Gew.-% des Polymers A, mit der oben beschriebenen Ausnahme, dass Verunreinigungen enthalten sein können.

Gemäß einer weiteren vorteilhaften Ausführungsform der Erfindung enthält die Kautschukmischung 10 bis 90 phr, besonders bevorzugt 40 bis 90 phr, des Polymers A in Kombination mit 10 bis 90 phr bzw. besonders bevorzugt 10 bis 60 phr, wenigstens eines weiteren Kautschuks.

Der wenigstens eine weitere Kautschuk ist dabei bevorzugt ausgewählt aus der Gruppe, bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk und/oder Flüssigkautschuken (mit einem Molekulargewicht Mw gemäß GPC von größer als 20000 g/mol) und/oder Halobutylkautschuk und/oder Polynorbornen und/oder Isopren-Isobutylen-Copolymer und/oder Ethylen-Propylen-Dien-Kautschuk und/oder Nitrilkautschuk und/oder Chloroprenkautschuk und/oder Acrylat-Kautschuk und/oder Fluorkautschuk und/oder Silikon-Kautschuk und/oder Polysulfidkautschuk und/oder Epichlorhydrinkautschuk und/oder Styrol-Isopren-Butadien-Terpolymer und/oder hydrierter Acrylnitrilbutadienkautschuk und/oder Isopren-Butadien-Copolymer und/oder hydrierter Styrol-Butadien-Kautschuk.
Insbesondere Nitrilkautschuk, hydrierter Acrylnitrilbutadienkautschuk, Chloroprenkautschuk, Butylkautschuk, Halobutylkautschuk oder Ethyl-en-Propylen-Dien-Kautschuk kommen bei der Herstellung von technischen Gummiartikeln, wie Gurte, Riemen und Schläuche, und/oder Schuhsohlen zum Einsatz.
Bevorzugt handelt es sich bei dem weiteren Kautschuk um wenigstens einen weiteren Dienkautschuk. Das enthaltene Polymer A stellt ebenfalls einen Dienkautschuk dar.
Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Bevorzugt ist der wenigstens eine weitere Dienkautschuk ausgewählt aus der Gruppe bestehend aus synthetischem Polyisopren (IR) und natürlichem Polyisopren (NR) und Styrol-Butadien-Kautschuk (SBR) und Polybutadien (BR).
Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.
Ferner ist auch ein Gemisch eines oder mehrerer natürlicher Polyisoprene mit einem oder mehreren synthetischen Polyisopren(en) denkbar.

Falls in der erfindungsgemäßen Kautschukmischung neben dem enthaltenen Polymer A) als weiterer Dienkautschuk wenigstens ein Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.
Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Für den Fall, dass neben dem Polymer A als weiterer Dienkautschuk wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.

Der Styrol-Butadien-Kautschuk (Styrol-Butadien-Copolymer) aus der Gruppe der weiteren Dienkautschuke ist im Rahmen der vorliegenden Anmeldung ein im Stand der Technik bekannter Styrol-Butadien-Kautschuk.

Erfindungswesentlich ist es, dass die Kautschukmischung wenigstens einen Füllstoff enthält. Bevorzugt enthält die Kautschukmischung 20 bis 300 phr wenigstens eines Füllstoffs.
Hierbei kann es sich um alle in der Kautschukindustrie denkbaren Füllstoffe handeln, wie Ruß und/oder Kieselsäure oder andere Füllstoffe, wie beispielsweise Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).
Weitere ggf. verstärkende Füllstoffe sind z. B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".
Zinkoxid gehört im Rahmen der vorliegenden Erfindung nicht zu den Füllstoffen.

Bevorzugt handelt es sich bei dem Füllstoff um wenigstens eine Kieselsäure und/oder wenigstens einen Ruß.

Als Ruße kommen alle der fachkundigen Person bekannten Rußtypen in Frage.
In einer Ausführungsform hat der Ruß eine Jodzahl, gemäß ASTM D 1510, die auch als Jodadsorptionszahl bezeichnet wird, zwischen 30 g/kg und 250 g/kg, bevorzugt 30 bis 180 g/kg, besonders bevorzugt 40 bis 180 g/kg, und ganz besonders bevorzugt 40 bis 130 g/kg, und eine DBP-Zahl gemäß ASTM D 2414 von 30 bis 200 ml/100 g, bevorzugt 70 bis 200 ml/100g, besonders bevorzugt 90 bis 200 ml/100g.
Die DBP-Zahl gemäß ASTM D 2414 bestimmt das spezifische Absorptionsvolumen eines Rußes oder eines hellen Füllstoffes mittels Dibutylphthalat.
Die Verwendung eines solchen Rußtyps in der Kautschukmischung, insbesondere für Fahrzeugreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Rußtyp in der jeweiligen Kautschukmischung verwendet wird, es können aber auch verschiedene Rußtypen in die Kautschukmischung eingemischt werden. Die Gesamtmenge an enthaltenen Rußen entspricht aber maximal 300 phr.

Bei der Kieselsäure kann es sich um die dem Fachmann bekannten Kieselsäuretypen, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 100 bis 320 m²/g und ganz besonders bevorzugt von 120 bis 235 m²/g, und eine CTAB-Oberfläche (gemäß ASTM D 3765) von 30 bis 400 m²/g, bevorzugt von 50 bis 330 m²/g, besonders bevorzugt von 100 bis 300 m²/g und ganz besonders bevorzugt von 110 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z. B. Zeosil® 1165 MP der Firma Solvay), zum Einsatz kommen. Besonders bevorzugt handelt es sich bei dem Füllstoff um wenigstens eine Kieselsäure.

Gemäß einer bevorzugten Ausführungsform der Erfindung enthält die Kautschukmischung als Füllstoff wenigstens eine Kieselsäure, wobei eine oder mehrere verschiedene Kieselsäuren mit den oben genannten Merkmalen denkbar sind, wobei die Gesamtmenge an enthaltenen Kieselsäuren maximal 300 phr beträgt.
Die erfindungsgemäße Kautschukmischung enthält in dieser Ausführungsform 20 bis 300 phr, bevorzugt 20 bis 250 phr, besonders bevorzugt 20 bis 150 phr und ganz besonders bevorzugt 80 bis 110 phr wenigstens einer Kieselsäure.

Gemäß einer vorteilhaften Weiterbildung dieser Ausführungsform der Erfindung enthält die Kautschukmischung außer einer oder mehrerer Kieselsäure(n) keinen weiteren Füllstoff.
Gemäß einer weiteren vorteilhaften Weiterbildung dieser Ausführungsform der Erfindung enthält die Kautschukmischung außer einer oder mehrerer Kieselsäure(n) ausschließlich wenigstens einen Ruß als weiteren Füllstoff. Die Rußmenge beträgt hierbei 0,1 bis 20 phr, bevorzugt 0,1 bis 10 phr, wobei die Gesamtmenge aus Ruß und Kieselsäure maximal 300 phr beträgt.

Gemäß einer bevorzugten Ausführungsform der Erfindung enthält die Kautschukmischung als Füllstoff wenigstens einen Ruß wobei einer oder mehrere verschiedene Ruße (Rußtypen) mit den oben genannten Merkmalen denkbar sind.
Die erfindungsgemäße Kautschukmischung enthält in dieser Ausführungsform 20 bis 300 phr wenigstens eines Rußes, bevorzugt 20 bis 150 phr, besonders bevorzugt 40 bis 150 phr, ganz besonders bevorzugt 40 bis 100 phr.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Silane enthalten. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sₓ- (mit x = 2 bis 8).
So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.
Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält.
Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden.

Gemäß einer bevorzugten Ausführungsform der Erfindung enthält die Kautschukmischung ein 3,3'-Bis(triethoxysilylpropyl)polysulfid mit 2 bis 8 Schwefelatomen als Silan, bevorzugt ein Gemisch mit 70 bis 80 Gew.-% 3,3'-Bis(triethoxysilylpropyl)disulfid.

Gemäß einer weiteren bevorzugten Ausführungsform der Erfindung enthält die Kautschukmischung zumindest ein geblocktes und/oder ungeblocktes Mercaptosilan. Unter ungeblockten Mercaptosilanen sind Silane zu verstehen, die eine -S-H-Gruppe aufweisen, also ein Wasserstoffatom am Schwefelatom. Unter geblockten Mercaptosilanen sind Silane zu verstehen, die eine S-SG-Gruppe aufweisen, wobei SG die Abkürzung für eine Schutzgruppe am Schwefelatom ist. Bevorzugte Schutzgruppen sind, wie unten ausgeführt, Acylgruppen.

Der Ausdruck "geblocktes und/oder ungeblocktes Mercaptosilan" bedeutet, dass sowohl ein geblocktes, als auch ein ungeblocktes, als auch ein Gemisch aus geblocktem und ungeblocktem Silan in der erfindungsgemäßen Kautschukmischung enthalten sein kann. Dem Fachmann ist klar, dass sich diese Angabe auf den Anfangszustand der Bestandteile der schwefelvernetzbaren Kautschukmischung bezieht und während des Mischvorgangs und/oder der Vulkanisation die Schutzgruppen abgespalten werden und die jeweiligen Schwefelatome chemisch reagieren.

Bevorzugt weist das geblockte und/oder ungeblockte Mercaptosilan die allgemeine Summenformel X) auf:

X) (R⁷)₃Si-Z-S-R⁸,

wobei die Reste R⁷ innerhalb eines Moleküls gleich oder verschieden voneinander sein können und Alkoxy-Gruppen mit 1 bis 10 Kohlenstoffatomen und/oder Alkylpolyethergruppen der Form -O-((CH₂)ₓ-O-)_{z}R⁹ mit z = 2 bis 9 und x = 2 bis 9 sind, wobei die Reste R⁹ innerhalb eines Moleküls gleich oder verschieden voneinander sein können und Alkylgruppen mit 10 bis 25 Kohlenstoffatomen sind, und wobei R⁸ eine Acylgruppe mit 1 bis 20 Kohlenstoffatomen oder ein Wasserstoffatom (H) ist, und
wobei Z eine Alkylgruppe mit 1 bis 10 Kohlenstoffatomen ist.
S ist die Abkürzung für Schwefel und Si für Silizium und O für Sauerstoffatom.

Gemäß einer bevorzugten Ausführungsform der Erfindung handelt es sich um wenigstens ein geblocktes Mercaptosilan. Gemäß einer bevorzugten Weiterbildung dieser Ausführungsform der Erfindung enthält die erfindungsgemäße Kautschukmischung kein, d.h. 0 phf, ungeblocktes Mercaptosilan, d.h. in dieser Ausführungsform ist sie frei von ungeblocktem Mercaptosilan.
Geblockte Mercaptosilane tragen an dem Schwefelatom eine Schutzgruppe, in dem vorliegenden Fall in Formel I) die Gruppe R⁸, wodurch sie auch "geschützte Mercaptosilane" genannt werden.

Gemäß einer bevorzugten Ausführungsform des geblockten Mercaptosilans sind alle Gruppen R⁷ Alkoxygruppen. Besonders bevorzugt ist wenigstens eine der drei Gruppen R⁷ eine Ethoxygruppe. Ganz besonders bevorzugt handelt es sich bei allen drei Gruppen R⁷ um jeweils eine Ethoxygruppe (abgekürzt mit OEt).
Gemäß einer bevorzugten Ausführungsform der Erfindung handelt es sich bei dem geblockten Mercaptosilan um 3-Octanoylthio-1-propyltriethoxysilan, womit in oben genannter Formel I) alle Reste R⁴ Ethoxy (OEt) sind und Z eine Propylgruppe ist und R⁸ eine Octanoylgruppe ist.
Überraschenderweise ergibt sich aus der Kombination des oben beschriebenen Polymers A mit einem geblockten Mercaptosilan, insbesondere 3-Octanoylthio-1-propyltriethoxysilan, eine besonders gute Verbesserung der Rollwiderstandsindikatoren.

Die Menge des Kupplungsagens beträgt bevorzugt 0,1 bis 20 phf, besonders bevorzugt 1 bis 15 phf.
Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.
Weiterhin kann die Kautschukmischung weitere Aktivatoren und/oder Agenzien für die Anbindung von Füllstoffen, insbesondere Ruß, enthalten. Hierbei kann es sich beispielsweise um die z. B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Die genannten Silane und Aktivatoren werden bei der Herstellung der Kautschukmischung bevorzugt in wenigstens einer Grundmischstufe zugegeben.

Die erfindungsgemäße Kautschukmischung kann 0 bis 150 phr wenigstens eines Weichmachers enthalten. Gemäß einer bevorzugten Ausführungsform enthält die erfindungsgemäße Kautschukmischung wenigstens einen Weichmacher, wobei die Gesamtmenge an Weichmacher bevorzugt 0,1 bis 150 phr, beträgt. Hierdurch ergibt sich insbesondere in Kombination mit den oben genannten Bestandteilen eine besonders gute Prozessierbarkeit der Kautschukmischung, insbesondere der Extrudate vor der Vernetzung, bei gleichzeitig guten Rollwiderstandsindikatoren und gutem (und damit geringem) Wärmeaufbau.
Gemäß einer bevorzugten Ausführungsform der Erfindung enthält die Kautschukmischung, insbesondere und beispielsweise für innere Reifenbauteile, 1 bis 25 phr wenigstens eines Weichmachers.
Gemäß einer weiteren bevorzugten Ausführungsform der Erfindung enthält die Kautschukmischung, insbesondere und beispielsweise für Laufstreifen, bevorzugt von Winterreifen, 30 bis 80 phr wenigstens eines Weichmachers.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z. B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.
Der Weichmacher ist bevorzugt ausgewählt aus der Gruppe bestehend aus den oben genannten Weichmachern.
Mineralöle sind als Weichmacheröle besonders bevorzugt.
Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Der oder die Weichmacher werden bei der Herstellung der erfindungsgemäßen Kautschukmischung bevorzugt in wenigstens einer Grundmischstufe zugegeben.

Des Weiteren kann die erfindungsgemäße Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), N,N'-bis-(1,4-Dimethylpentyl)-p-Phenylenediamin (77PD)
b) Aktivatoren, wie z. B. Zinkoxid und Fettsäuren (z. B. Stearinsäure),
c) Wachse,
d) Harze, insbesondere Klebharze,
e) Mastikationshilfsmittel, wie z. B. 2,2'-Dibenzamidodiphenyldisulfid (DBD und
f) Verarbeitungshilfsmittel, wie z. B. Fettsäuresalze, wie z. B. Zinkseifen, und Fettsäureester und deren Derivate.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Der Mengenanteil der Gesamtmenge an weiteren Zusatzstoffen beträgt 3 bis 150 phr, bevorzugt 3 bis 100 phr und besonders bevorzugt 5 bis 80 phr.
Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).
Hierbei kann es sich um alle dem Fachmann bekannten Typen an Zinkoxid handeln, wie z. B. ZnO-Granulat oder -Pulver. Das herkömmlicherweise verwendete Zinkoxid weist in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation wird ggf. in Anwesenheit von Schwefel und/oder Schwefelspendern und mit Hilfe von Vulkanisationsbeschleunigern durchgeführt, wobei einige Vulkanisationsbeschleuniger zugleich als Schwefelspender wirken können.
In dem Polymer A gemäß Formel I) sind netzwerkbildende Gruppen gebunden, die an der Vulkanisation beteiligt sind und während der Vulkanisation vernetzen. Das Polymer A gemäß Formel I) gehört im Rahmen der vorliegenden Erfindung aber nicht zu den Schwefelspendern.

Schwefel und/oder weitere Schwefelspender sowie ein oder mehrere Beschleuniger werden im letzten Mischungsschritt der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B.

DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel D):

D) G[CₐH₂ₐ-CH₂-S_{b}Y]_{c}

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5.
Die kautschukaktive Gruppe ist bevorzugt ausgewählt aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe). Hiermit werden sehr gute Abrieb- und Reißeigenschaften der erfindungsgemäßen Kautschukmischung erzielt.

Die benötigte Menge an weiterem Schwefel in Form von elementarem Schwefel und/oder weiterem Schwefelspender richtet sich nach dem Einsatzgebiet der jeweiligen Kautschukmischung. Dem Fachmann sind die jeweiligen Mengen der Zudosierung bekannt. Bei der Zugabe von elementarem Schwefel betragen die Mengen im Fall einer Kautschukmischung für den Wulst von Fahrzeugreifen beispielsweise 0 bis 5 phr. Für Laufstreifen von Fahrzeugreifen, die in der Regel gegenüber dem Wulst einen geringeren Schwefelgehalt aufweisen, beträgt die Menge an zuzugebendem elementaren Schwefel bevorzugt 0 bis 4 phr.

Gemäß einer vorteilhaften Weiterbildung der Erfindung werden mehrere Beschleuniger eingesetzt. Bevorzugt wird ein Sulfenamidbeschleuniger, besonders bevorzugt CBS, in Kombination mit dem Guanidin-Beschleuniger DPG (Diphenylguanidin) eingesetzt. Die Menge an DPG beträgt dabei 0 bis 5 phr, bevorzugt 0,1 bis 3 phr, besonders bevorzugt 0,5 bis 2,5 phr, ganz besonders bevorzugt 1 bis 2,5 phr.

Außerdem können in der Kautschukmischung Vulkanisationsverzögerer vorhanden sein.

Ein weiterer Gegenstand der vorliegenden Erfindung ist ein Verfahren zur Herstellung einer schwefelvernetzbaren Kautschukmischung. Das erfindungsgemäße Verfahren umfasst a) das Vermischen von 10 bis 100 phr wenigstens eines modifizierten Polymers A, welches wie oben beschrieben hergestellt wurde, mit 0 bis 90 phr wenigstens eines weiteren Kautschuks und 20 bis 300 phr wenigstens eines Füllstoffs, zur Herstellung einer Kautschukgrundmischung und b) das anschließende Vermischen mit wenigstens einem Schwefelspender und/oder elementarem Schwefel und/oder wenigstens einem Vulkanisationsbeschleuniger zur Herstellung einer Kautschukfertigmischung, wie oben ausgeführt. Anschließend erfolgt bevorzugt eine Vulkanisation.
Sämtliche oben getroffene Ausführungen zu dem Polymer A sowie den sonstigen Bestandteilen der erfindungsgemäßen Kautschukmischung gelten analog für das erfindungsgemäße Verfahren.

Mit einem derartigen Verfahren wird eine Kautschukmischung bereitgestellt, die im Vergleich zu Kautschukmischungen aus dem Stand der Technik eine Verbesserung im Zielkonflikt aus Rollwiderstand und Nassgriff aufweist, wobei das Abriebverhalten auf einem vergleichbaren Niveau verbleibt oder ebenfalls verbessert wird. Erfindungswesentlich ist es, dass das Polymer, wie oben bereits bei der erfindungsgemäßen Kautschukmischung ausgeführt, entlang der Polymerketten P vor dem Einmischen in die Kautschukmischung modifiziert wird.
Das ledigliche Vermischen eines Polymers mit einem Modifikator und die anschließende Weiterverarbeitung zu bzw. in einer Kautschukmischung, wie in der WO2008/076875A1 offenbart, führt nicht zu einer derartig überraschenden Verbesserung im Zielkonflikt aus Rollwiderstand und Nassgriff, s. Tab. 4.

Die Herstellung der Kautschukmischung erfolgt ansonsten nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht.

Ein weiterer Gegenstand der vorliegenden Erfindung ist ein Vulkanisat, welches durch Schwefelvulkanisation wenigstens einer erfindungsgemäßen Kautschukmischung, enthaltend das Polymer A und wenigstens einen Füllstoff, erhalten wird. Bei diesem Erfindungsgegenstand handelt es sich somit um die vulkanisierte Kautschukmischung. Sämtliche oben getroffene Ausführungen zu dem Polymer A sowie den sonstigen Bestandteilen der erfindungsgemäßen Kautschukmischung gelten analog für das erfindungsgemäße Vulkanisat.

Zur Verwendung in Fahrzeugreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden.

Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings.

Die Erfindung soll nun anhand von Vergleichs- und Ausführungsbeispielen, die in den Tabellen 1 bis 3 zusammengefasst sind, näher erläutert werden.
"Raumtemperatur" (RT) wie hier verwendet bezeichnet eine Temperatur von etwa 20-25°C oder, bei Messung eines speziellen Parameters, von 20°C.

### Synthese des Polymerrückgratmodifikators BM1

1,6-Hexanedithiol (12,7 g, 84,2 mmol) wurde in 300 mL tert-Butylmethylether gelöst, und n-BuLi (30,0 g mL, 92,5 mmol, 20 Gew.-% in Cyclohexan) wurde hinzugetropft. Die Mischung wurde für 2 h bei Raumtemperatur gerührt, und tert-Butyldimethylchlorsilan wurde hinzugegeben (12,6 g, 83,7 mmol). Nach Refluxieren der Mischung über Nacht wurde sie mit Wasser versetzt. Die organische Phase wurde abgetrennt und zweimal mit Wasser gewaschen. Die gesammelten wässrigen Phasen wurden vereinigt und mit Diethylether gewaschen. Die gesammelten und vereinigten organischen Phasen wurden mit Natriumsulfat getrocknet, und die flüchtigen Bestandteile wurden im Vakuum entfernt. Der Rückstand wurde fraktioniert destilliert, unter Erhalt einer Ausbeute von 64% an **BM1**, Siedepunkt 105°C bei 0,2 mbar.
¹H-NMR (400 Hz, C₆D₆, 298 K): δ = 0,21 (s, 6H, Si(C*H*₃)₂); 0,99 (s, 9H, C(C*H*₃)₃); 1,15-1,05 (m, 3H, C*H₂*/S*H*); 1,23-1,15 (m, 2H, C*H*₂); 1,29 (qu, 2H, C*H*₂); 1,50 (qu, 2H, C*H*₂); 2,12 (q, 2H, C*H*₂-SH); 2,40 (t, 2H, C*H*₂-S-Si); ¹³C-NMR (101 Hz, C6D6, 298 K): δ = -3,09 (*C*H₃), 19,50 (*C*H₂), 24,90 (*C*H₂), 26,91 (*C*H₃), 27,04 (*C*H₂), 28,43 (*C*H₂), 28,67 (*C*H₂), 33,63 (*C*H₂), 34,53 (*C*H₂).

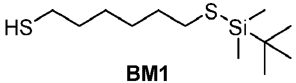

### Copolymerisation von 1,3-Butadien mit Styrol (Vergleichspolymer V)

Die Copolymerisation wurde in einem doppelwandigen 40 L-Stahlreaktor durchgeführt, der vor der Zugabe des organischen Lösungsmittels, der Monomere, der polaren Koordinatorverbindung, der Initiatorverbindung und anderer Komponenten mit Stickstoff gespült wurde. Die folgenden Komponenten wurden in der angegebenen Reihenfolge hinzugegeben: Cyclohexan-Lösungsmittel (18.560 g); Butadien-Monomer (1.777 g), Styrol-Monomer (448 g) und Tetramethylethylendiamin (TMEDA, 1,0 g), und die Mischung wurde auf 40°C erhitzt, gefolgt von Titration mit n-Butyllithium zur Entfernung von Feuchtigkeitsspuren oder anderen Verunreinigungen. n-BuLi (17,6 mmol) wurde zum Starten der Polymerisationsreaktion in den Polymerisationsreaktor hinzugegeben. Die Polymerisation wurde für 20 Minuten durchgeführt, wobei die Polymerisationstemperatur auf nicht mehr als 70°C ansteigen gelassen wurde. Dann wurden Butadien (1.202 g) und Styrol (91 g) als Monomere über 55 min hinweg hinzugegeben. Die Polymerisation wurde für weitere 20 Minuten durchgeführt, gefolgt von der Zugabe von 63 g Butadien-Monomer. Nach 20 Minuten wurde die Polymerisation durch Zugabe von Methanol abgebrochen (ein Äquivalent auf Basis des Initiators). Zur Polymerlösung wurde 0,25 Gew.-% IRGANOX 1520, bezogen auf das Monomer-Gesamtgewicht, als Stabilisator hinzugegeben. Diese Mischung wurde für 10 Minuten gerührt. Die resultierende Polymerlösung wurde dann mit Wasserdampf für eine Stunde gestrippt, um Lösungsmittel und andere flüchtige Stoffe zu entfernen, und in einem Ofen bei 70°C für 30 Minuten und dann zusätzliche für drei Tage bei Raumtemperatur getrocknet.

### Herstellung von Rückgrat-modifiziertem Polymer A

Zunächst wurde die Copolymerisation von 1,3-Butadien und Styrol analog der Herstellung des Vergleichspolymers V durchgeführt. Die Rückgrat-Modifizierung wurde in einem doppelwandigen 10 L-Stahlreaktor durchgeführt, der zunächst mit Stickstoff gespült wurde, bevor das Vergleichspolymer V (4.000 g) hinzugegeben wurde, gefolgt von der Zugabe von Cyclohexan (2.000 g) und dem Rückgratmodifikator **BM1** (7,7 g, 29,1 mmol). Die Mischung wurde auf 95°C erhitzt, und Lauroylperoxidlösung in Cyclohexan wurde in 4 Portionen alle 30 Minuten (1,13/0,86/0,57/0,28 mmol, insgesamt 2,84 mmol) hinzugegeben. Die Polymerlösung wurde auf Raumtemperatur abgekühlt, und 1,2 g IRGANOX 1520 wurden hinzugegeben. Eine GC-Analyse des nicht umgesetzten Rückgratmodifikator **BM1** zeigte eine Pfropfausbeute von 60%. Die modifizierte Polymerlösung wurde dann mit Wasserdampf für eine Stunde gestrippt, um Lösungsmittel und andere flüchtige Stoffe zu entfernen, und in einem Ofen bei 70°C für 30 Minuten und dann zusätzliche für drei Tage bei Raumtemperatur getrocknet.

### Herstellung von Polymer A' durch Extraktion des nicht umgesetzten Rückgratmodifikators BM1 aus Polymer A

Polymer A (94 g) wurde in einer Schneidmühle zerkleinert und die erhaltenen Kautschukkrümel in Isopropanol (800 g) suspendiert. Die Suspension wurde für 8 Stunden refluxiert und die Kautschukkrümel abgetrennt und getrocknet. Eine GC Analyse zeigte, dass 90% des enthaltenen Rückgratmodifikator **BM1** entfernt wurden.

**Tabelle 1. Analytische Daten zum Vergleichspolymer V und Polymer A**

| | Mw [g/mol] | Mn [g/mol] | Mooney viscosity | Vinyl content [Gew%] | Styrene content [Gew%] | Tg [°C] |
|---|---|---|---|---|---|---|
| Vergleichspolymer V | 334417 | 303967 | 35,3 | 29,2 | 15,1 | -60,6 |
| Polymer A | 476469 | 358682 | 66,2 | 29,6 | 14,7 | -60,7 |

### Herstellung von Kautschukmischungen und Vergleichsversuche

Die mit "E" gekennzeichneten Mischungen sind hierbei erfindungsgemäße Mischungen, während es sich bei den mit "V" gekennzeichneten Mischungen um Vergleichsmischungen handelt. Bei sämtlichen in den Tabellen 2 bis 4 enthaltenen Mischungsbeispielen sind die angegebenen Mengenangaben Gewichtsteile, die auf 100 Gewichtsteile Gesamtkautschuk bezogen sind (phr) oder auf 100 Gewichtsteile Kieselsäure bezogen sind (phf).
Die Mischungsherstellung erfolgte unter üblichen Bedingungen in zwei Stufen in einem Labortangentialmischer.
Die erfindungsgemäßen Kautschukmischungen E1, E2 und E4 enthalten 90 phr des Polymers A (Formel I) auf. Bei den Kautschukmischungen V1, V3 und V4 wurde anstelle eines Polymers gemäß Formel I) das Vergleichspolymer V verwendet, das im Vergleich zu Polymer A ein vergleichbares Molekulargewicht, einen vergleichbaren Vinyl-Gehalt und einen vergleichbaren Styrol-Gehalt aufweist. Das Vergleichspolymer ist nicht modifiziert und kein gekoppeltes Polymer. Die Kautschukmischung V2 wurde mit einer größeren Menge an Vulkanisationsagenzien (Beschleuniger und Schwefel) auf die gleiche Härte bei 70 °C eingestellt wie E1 und ist somit die härtegleiche Referenz. Die erfindungsgemäße Kautschukmischung E3 enthält das Polymer A', das nach erfolgter Modifikation aus dem Polymer A durch Aufreinigung, d.h. Abtrennung von ggf. restlichem Modifikator BM1, erhalten wurde.
Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte (Einheit Shore A, abgekürzt ShA) bei Raumtemperatur (RT) und bei 70 °C gemäß DIN 53 505
- Rückprallelastizität (Rückprall) bei Raumtemperatur (RT) und 70°C gem. DIN 53 512
- Spannungswerte bei 50%, 100%, 200%, 300 % Dehnung (Modul 50, Modul 100, Modul 200 bzw. Modul 300) bei Raumtemperatur (RT) gemäß DIN 53 504 mit den Probekörpern Ring: V1, V2, E1, V3, E2, E3, V5, V6, V7
   und S3-Stab aus 2mm-Rahmen: V4, E4, V8, V9, V10
- Zugfestigkeit und Bruchdehnung bei Raumtemperatur gemäß DIN 53 504
- Abrieb bei Raumtemperatur gemäß DIN53 516 bzw. DIN/ISO 4649
- Maximaler Verlustfaktor tan δ (max) aus dynamisch-mechanischer Messung gemäß DIN 53 513 (Temperaturdurchlauf, "temperature sweep")

### Verwendete Substanzen:

^{a)} Alterungsschutzmittel: Ozonschutzwachs und 6PPD
^{b)} Kieselsäure: VN3, Fa. Evonik
^{c)} Silan: S2-Silan, 75 Gew.-% Disulfide, bspw. Si 266® von der Fa. Evonik Industries AG
^{d)} geblocktes Mercaptosilan: NXT, 3-(Octanoylthio)-1-Propyl-Triethoxysilan, Fa. Momentive
^{e)} Modifikator: 1,6-Hexandithiol
^{f)} Modifikator: doppelt geschütztes 1,6-Hexandithiol:

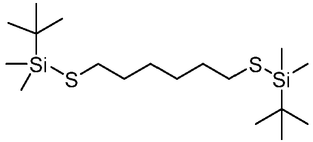

**Tabelle 2**

| **Bestandteile** | **Einheit** | **V1** | **V2** | **E1** |
|---|---|---|---|---|
| NR TSR | phr | 10 | 10 | 10 |
| Vergleichspolymer V | phr | 90 | 90 | - |
| Polymer A | phr | - | - | 90 |
| Ruß N339 | phr | 85 | 85 | 85 |
| Öl TDAE | phr | 45 | 45 | 45 |
| Alterungsschutzmittel ^{a)} | phr | 4 | 4 | 4 |
| Stearinsäure | phr | 2,5 | 2,5 | 2,5 |
| Zinkoxid | phr | 2,5 | 2,5 | 2,5 |
| Beschleuniger CBS | phr | 6,4 | 9,6 | 6,4 |
| Schwefel | phr | 0,64 | 0,96 | 0,64 |
| | | | | |

| **Physikalische Eigenschaften** | | | | |
|---|---|---|---|---|
| Shore-Härte bei RT | Shore A | 65 | 68 | 66 |
| Shore-Härte bei 70 °C | Shore A | 60,4 | 64 | 64 |
| Rückprallelastizität bei RT | % | 31 | 31,8 | 37,8 |
| Rückprallelastizität bei 70 °C | % | 45,8 | 49,1 | 55,3 |
| Diff. Rückpr. (70 °C-RT) | | 14,8 | 17,3 | 17,5 |
| Modul 50 | MPa | 1,4 | 1,7 | 1,8 |
| Modul 100 | MPa | 2,5 | 3,5 | 4,2 |
| Zugfestigkeit | MPa | 11,7 | 11,7 | 11,3 |
| Bruchdehnung | % | 342 | 265 | 206 |
| Tan δ (max) | | 0,259 | 0,243 | 0,188 |
| Abrieb | mm³ | 94 | 129 | 92 |

**Tabelle 3**

| **Bestandteile** | **Einheit** | **V3** | **E2** | **E3** | **V4** | **E4** |
|---|---|---|---|---|---|---|
| NR TSR | phr | 10 | 10 | 10 | 10 | 10 |
| Vergleichspolymer V | phr | 90 | - | - | 90 | - |
| Polymer A | phr | - | 90 | - | - | 90 |
| Polymer A' | phr | - | - | 90 | - | - |
| Kieselsäure ^{b)} | phr | 95 | 95 | 95 | 95 | 95 |
| Silan ^{d)} | phf | 7,2 | 7,2 | 7,2 | - | - |
| Silan ^{d)} | phf | - | - | - | 8,1 | 8,1 |
| Öl TDAE | phr | 35 | 35 | 35 | 35 | 35 |
| Alterungs. ^{a)} | phr | 4 | 4 | 4 | 4 | 4 |
| Stearinsäure | phr | 2,5 | 2,5 | 2,5 | 2,5 | 2,5 |
| Zinkoxid | phr | 2,5 | 2,5 | 2,5 | 2,5 | 2,5 |
| DPG | phr | 2,0 | 2,0 | 2,0 | 2,0 | 2,0 |
| CBS | phr | 6,4 | 6,4 | 6,4 | 6,4 | 6,4 |
| Schwefel | phr | 0,64 | 0,64 | 0,64 | 0,64 | 0,64 |

| **Physikalische Eigenschaften** | | | | | | |
|---|---|---|---|---|---|---|
| Härte RT | Shore A | 74,2 | 73,9 | 76 | 72,7 | 70,2 |
| Härte 70 °C | Shore A | 69,6 | 70,6 | 72,2 | 68,7 | 68,3 |
| Rückpr. RT | % | 36,9 | 41 | 40,5 | 37,0 | 45,6 |
| Rückpr. 70 °C | % | 47,4 | 55,9 | 54,6 | 48,8 | 62,8 |
| Diff. Rückpr. | | 10,5 | 14,9 | 14,1 | 11,8 | 17,2 |
| Modul 50 | MPa | 1,8 | 2,1 | 2,1 | - | - |
| Modul 100 | MPa | 2,9 | 4,2 | 4 | 2,9 | 3,3 |
| Modul 200 | MPa | 5,6 | 10 | 10,1 | 5,5 | 8,1 |
| Zugfestigkeit | MPa | 16,4 | 15 | 18 | 14,9 | 14,6 |
| Bruchdehnung | % | 506 | 296 | 329 | 472 | 308 |
| Tan δ (max) | | 0,212 | 0,167 | 0,174 | 0,189 | 0,127 |
| Abrieb | mm³ | 61 | 77 | 58 | 69 | 95 |

**Tabelle 4**

| **Bestandteile** | **Einh.** | **V5** | **V6** | **V7** | **V8** | **V9** | **V10** |
|---|---|---|---|---|---|---|---|
| NR TSR | phr | 10 | 10 | 10 | 10 | 10 | 10 |
| Vergleichspolymer V | phr | 90 | 90 | 90 | 90 | 90 | 90 |
| Modifikator ^{e)} | phr | - | 0,85 | 3,0 | - | 3,0 | - |
| Modifikator ^{f)} | phr | - | - | - | - | - | 7,75 |
| Ruß N339 | phr | - | - | - | 85 | 85 | 85 |
| Kieselsäure ^{b)} | phr | 95 | 95 | 95 | - | - | - |
| Silan ^{c)} | phf | 7,2 | 7,2 | 7,2 | - | - | - |
| Öl TDAE | phr | 35 | 35 | 35 | 45 | 45 | 45 |
| Alterungs. ^{a)} | phr | 4 | 4 | 4 | 4 | 4 | 4 |
| Stearinsäure | phr | 2,5 | 2,5 | 2,5 | 2,5 | 2,5 | 2,5 |
| Zinkoxid | phr | 2,5 | 2,5 | 2,5 | 2,5 | 2,5 | 2,5 |
| DPG | phr | 2,0 | 2,0 | 2,0 | - | - | - |
| CBS | phr | 6,4 | 6,4 | 6,4 | 6,4 | 6,4 | 6,4 |
| Schwefel | phr | 0,64 | 0,64 | 0,64 | 0,64 | 0,64 | 0,64 |

| **Physikalische Eigenschaften** | | | | | | | |
|---|---|---|---|---|---|---|---|
| Härte RT | Shore A | 74,1 | 75,8 | 73,4 | 64 | 60 | 56 |
| Härte 70 °C | Shore A | 69,6 | 71,0 | 68,2 | 59 | 55 | 49 |
| Rückpr. RT | % | 18,0 | 17,8 | 18,5 | 18 | 19 | 20 |
| Rückpr. 70 °C | % | 46,5 | 48,0 | 47,6 | 37 | 40 | 35 |
| Diff. Rückpr. | | 28,5 | 30,2 | 29,1 | 19 | 21 | 15 |
| Modul 50 | MPa | 2,0 | 2,2 | 1,8 | - | - | - |
| Modul 100 | MPa | 3,7 | 3,9 | 3,1 | 2,09 | 1,90 | 1,24 |
| Modul 200 | MPa | 7,3 | 7,7 | 6,1 | 5,63 | 5,17 | 2,79 |
| Zugfestigkeit | MPa | 12 | 11 | 12 | 14,4 | 14,3 | 12,9 |
| Bruchdehnung | % | 318 | 288 | 368 | 412 | 459 | 627 |
| Tan δ (max) | | 0,196 | 0,195 | 0,206 | 0,272 | 0,268 | 0,299 |
| Abrieb | mm³ | 175 | 135 | 146 | 181 | 211 | 312 |

Wie aus Tabelle 1 hervorgeht, zeigt die erfindungsgemäße Kautschukmischung E1 enthaltend Ruß als Füllstoff gegenüber der Vergleichsmischung V1 eine Verbesserung im Zielkonflikt aus Rollwiderstand und Nassgriff, was an der größeren Differenz der beiden Indikatoren Rückprallelastizität bei 70 °C (Rollwiderstand) und Raumtemperatur (Nassgriff) erkennbar ist. Ferner ist der verbesserte Rollwiderstand der E1 an dem geringeren Wert für den maximalen Verlustfaktor (tan δ max.) erkennbar. Zudem zeigt die erfindungsgemäße Kautschukmischung E1 gegenüber V1 ein vergleichbares Abriebverhalten und eine vergleichbare Zugfestigkeit.
Gegenüber der härtegleichen Referenz V2 zeigt die erfindungsgemäße Kautschukmischung E1 ein deutlich verbessertes Abriebverhalten.

Wie Tabelle 2 zu entnehmen ist, zeigen die erfindungsgemäßen Kautschukmischung E2, E3 und E4 enthaltend Kieselsäure als Füllstoff gegenüber den jeweiligen Vergleichsmischungen V3 und V4 eine Verbesserung im Zielkonflikt aus Rollwiderstand und Nassgriff, was an den größeren Differenzen der beiden Indikatoren Rückprallelastizität bei 70 °C (Rollwiderstand) und Raumtemperatur (Nassgriff) erkennbar ist. Hierbei scheint die Aufreinigung des Polymers nacherfolgter Modifikation (E3 mit gereinigtem modifiziertem Polymer A' vs. E2 mit modifiziertem Polymer A) keinen signifikanten Einfluss auf die Verbesserung des Zielkonfliktes aus Rollwiderstand und Nassgriff zu haben. Das Abriebverhalten von E2 und E4 liegt gegenüber den jeweiligen Vergleichsmischungen auf einem akzeptablen Niveau, während E3 enthaltend das gereinigte Polymer A' überraschenderweise ein gutes Abriebverhalten zeigt.
Somit ist es mit der erfindungsgemäßen Kautschukmischung möglich, insbesondere durch den Einsatz im Laufstreifen, den Zielkonflikt aus Rollwiderstand und Nassgriffverhalten auf Basis des Standes der Technik weiter zu verbessern ohne dass sich die Abriebfestigkeit verschlechtert.

Wie Tabelle 3 zu entnehmen ist, wird weder mit 1,6-Hexandithiol (V6 oder V7 versus V5 sowie V9 versus V8) noch mit dem doppelt geschütztem 1,6-Hexandithiol (V10 versus V8), welche als Modifikatoren dem Vergleichspolymer V beim Mischen der Kautschukmischung zugesetzt werden und nicht vorher an das Polymer geknüpft sind, die Verbesserungen beobachtet. Hier verschlechtern sich entweder die Differenzen der Rückprallelastizitäten sowie der Tangens Delta oder bleiben auf einem ähnlichen Niveau unter Verschlechterung des Abriebverhaltens.

Es ist also erfindungswesentlich, dass das Polymer A bereits gemäß Formel I) modifiziert ist, bevor es in die Kautschukmischung zusammen mit den anderen Mischungsbestandteilen eingemischt wird, und nicht unmodifiziertes Polymer und Modifikator separat der Kautschukmischung zugegeben werden.

## Patentansprüche

1. Schwefelvernetzbare Kautschukmischung, **dadurch gekennzeichnet, dass** sie wenigstens die folgenden Bestandteile enthält:
- Wenigstens einen Füllstoff und
- 10 bis 100 phr zumindest eines Polymers A gemäß folgender Formel I): 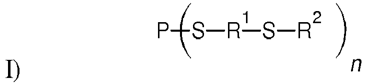 wobei
S ein Schwefelatom ist, und
P eine Polymerkette ist, die erhältlich ist durch anionische Polymerisation wenigstens eines konjugierten Diens und gegebenenfalls einer oder mehrerer vinylaromatischer Verbindungen und die gegebenenfalls kettenendmodifiziert ist, R¹ unabhängig ausgewählt ist aus C₁-C₁₁-Alkyl, C₆-C₁₁-Aryl, C₇-C₁₁-Aralkyl und C₂-C₁₁-Dialkylether, bevorzugt C₁-C₁₁-Alkyl, besonders bevorzugt C₁-C₈-Alkyl, R² unabhängig ausgewählt ist aus H, C₁-C₁₁-Alkyl, C₆-C₁₁-Aryl, C₇-C₁₁-Aralkyl, C₂-C₁₁-Dialkylether und -SiR³R⁴R⁵ ist, worin R³, R⁴ und R⁵ unabhängig ausgewählt sind aus H, C₁-C₁₆-Alkyl, C₆-C₁₆-Aryl und C₇-C₁₆-Aralkyl, und R² bevorzugt unabhängig ausgewählt ist aus H und -SiR³R⁴R⁵, worin R³, R⁴ und R⁵ unabhängig ausgewählt sind aus H, C₁-C₁₆-Alkyl, C₆-C₁₆-Aryl und C₇-C₁₆-Aralkyl, und
n eine ganze Zahl ist, ausgewählt aus 1 bis 200, bevorzugt 1 bis 100, besonders bevorzugt 1 bis 50,
wobei die Gruppe(n) -S-R¹-S-R² an das Rückgrat der Polymerkette P gebunden sind.

2. Kautschukmischung nach Anspruch 1, **dadurch gekennzeichnet, dass** das wenigstens eine konjugierte Dien ausgewählt ist aus der Gruppe bestehend aus 1,3-Butadien, 2-(C₁-C₅-Alkyl)-1,3-butadien, insbesondere Isopren (2-Methyl-1,3-butadien), 2,3-Dimethyl-1,3-butadien, 1,3-Pentadien, 2,4-Hexadien, 1,3-Hexadien, 1,3-Heptadien, 1,3-Octadien, 2-Methyl-2,4-pentadien, Cyclopentadien und 1,3-Cyclooctadien.

3. Kautschukmischung nach Anspruch 2, **dadurch gekennzeichnet, dass** das wenigstens eine konjugierte Dien 1,3-Butadien ist.

4. Kautschukmischung nach einem der vorherigen Ansprüche, **dadurch gekennzeichnet, dass** die vinylaromatische Verbindung ausgewählt ist aus der Gruppe bestehend aus Styrol, C₁-C₄-Alkyl-substituiertem Styrol, insbesondere 2-Methylstyrol, 3-Methylstyrol, 4-Methylstyrol, 2,4-Dimethylstyrol, 2,4,6-Trimethylstyrol, α-Methylstyrol, 2,4-Diisopropylstyrol und 4-tert-Butylstyrol, Stilben, Vinylbenzyldimethylamin, (4-Vinylbenzyl)dimethylaminoethylether, N,N-Dimethylaminoethylstyrol, tert-Butoxystyrol, Vinylpyridin sowie divinylaromatischen Verbindungen, insbesondere 1,2-Divinylbenzol, 1,3-Divinylbenzol und 1,4-Divinylbenzol, und einer Mischung aus zwei oder mehreren davon.

5. Kautschukmischung nach Anspruch 4, **dadurch gekennzeichnet, dass** die vinylaromatische Verbindung Styrol ist.

6. Kautschukmischung nach einem der vorherigen Ansprüche, **dadurch gekennzeichnet, dass** es sich bei dem Füllstoff um wenigstens eine Kieselsäure und/oder wenigstens einen Ruß handelt.

7. Kautschukmischung nach einem der vorherigen Ansprüche, **dadurch gekennzeichnet, dass** die Kautschukmischung 20 bis 300 phr wenigstens eines Füllstoffs enthält.

8. Kautschukmischung nach einem der vorherigen Ansprüche, **dadurch gekennzeichnet, dass** sie 40 bis 90 phr des Polymers A und 10 bis 60 phr wenigstens eines weiteren Kautschuks enthält.

9. Kautschukmischung nach Anspruch 8, **dadurch gekennzeichnet, dass** der wenigstens eine weitere Kautschuk ein Dienkautschuk ist, der ausgewählt ist aus der Gruppe bestehend aus natürlichem Polyisopren, synthetischem Polyisopren, Butadien-Kautschuk und Styrol-Butadien-Kautschuk.

10. Vulkanisat, welches durch Schwefelvulkanisation wenigstens einer Kautschukmischung nach einem der Ansprüche 1 bis 9 erhalten wird.

11. Fahrzeugreifen, **dadurch gekennzeichnet, dass** er in wenigstens einem Bauteil wenigstens ein Vulkanisat wenigstens einer Kautschukmischung nach Anspruch 10 enthält.

## Claims

1. Sulfur-crosslinkable rubber mixture, **characterized in that** it comprises at least the following constituents:
- at least one filler and
- 10 to 100 phr of at least one polymer A of the following formula I): 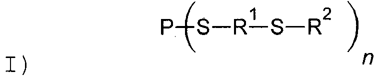 where
S is a sulfur atom, and
P is a polymer chain which is obtainable by anionic polymerization of at least one conjugated diene and optionally one or more vinylaromatic compounds and which has optionally been chain end-modified,
R¹ is independently selected from C₁-C₁₁-alkyl, C₆-C₁₁-aryl, C-₇-C₁₁-aralkyl and C₂-C₁₁-dialkyl ether, preferably C₁-C₁₁-alkyl, more preferably C₁-C₈-alkyl,
R² is independently selected from H, C₁-C₁₁-alkyl, C₆-C₁₁-aryl, C₇-C₁₁-aralkyl, C₂-C₁₁-dialkyl ether and -SiR³R⁴R⁵ in which R³, R⁴ and R⁵ are independently selected from H, C₁-C₁₆-alkyl, C₆-C₁₆-aryl and C₇-C₁₆-aralkyl, and R² is preferably independently selected from H and -SiR³R⁴R⁵ in which R³, R⁴ and R⁵ are independently selected from H, C₁-C₁₆-alkyl, C₆-C₁₆-aryl and C₇-C₁₆-aralkyl, and
n is an integer selected from 1 to 200, preferably 1 to 100, more preferably 1 to 50,
where the -S-R¹-S-R² group (s) are bonded to the backbone of the polymer chain P.

2. Rubber mixture according to Claim 1, **characterized in that** the at least one conjugated diene is selected from the group consisting of 1,3-butadiene, 2-(C₁-C₅-alkyl)-1,3-butadiene, especially isoprene (2-methyl-1,3-butadiene), 2,3-dimethyl-1,3-butadiene, 1,3-pentadiene, 2,4-hexadiene, 1,3-hexadiene, 1,3-heptadiene, 1,3-octadiene, 2-methyl-2,4-pentadiene, cyclopentadiene and 1,3-cyclooctadiene.

3. Rubber mixture according to Claim 2, **characterized in that** the at least one conjugated diene is 1,3-butadiene.

4. Rubber mixture according to any of the preceding claims, **characterized in that** the vinylaromatic compound is selected from the group consisting of styrene, C₁-C₉-alkyl-substituted styrene, especially 2-methylstyrene, 3-methylstyrene, 4-methylstyrene, 2,4-dimethylstyrene, 2,4,6-trimethylstyrene, α-methylstyrene, 2,4-diisopropylstyrene and 4-tert-butylstyrene, stilbene, vinylbenzyldimethylamine, 4-vinylbenzyl dimethylaminoethyl ether, N,N-dimethylaminoethylstyrene, tert-butoxystyrene, vinylpyridine and divinylaromatic compounds, especially 1,2-divinylbenzene, 1,3-divinylbenzene and 1,4-divinylbenzene, and a mixture of two or more of these.

5. Rubber mixture according to Claim 4, **characterized in that** the vinylaromatic compound is styrene.

6. Rubber mixture according to any of the preceding claims, **characterized in that** the filler is at least one silica and/or at least one carbon black.

7. Rubber mixture according to any of the preceding claims, **characterized in that** the rubber mixture contains 20 to 300 phr of at least one filler.

8. Rubber mixture according to any of the preceding claims, **characterized in that** it contains 40 to 90 phr of polymer A and 10 to 60 phr of at least one further rubber.

9. Rubber mixture according to Claim 8, **characterized in that** the at least one further rubber is a diene rubber selected from the group consisting of natural polyisoprene, synthetic polyisoprene, butadiene rubber and styrene-butadiene rubber.

10. Vulcanizate which is obtained by sulfur vulcanization of at least one rubber mixture according to any of Claims 1 to 9.

11. Vehicle tire, **characterized in that** it comprises at least one vulcanizate of at least one rubber mixture according to Claim 10 in at least one component.

## Revendications

1. Mélange de caoutchouc réticulable par le soufre, **caractérisé en ce qu'**il contient au moins les ingrédients suivants :
- au moins une charge et
- 10 à 100 phr d'au moins un polymère A selon la formule I) suivante : 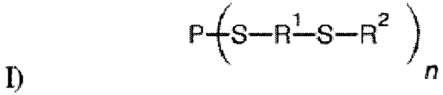
S étant un atome de soufre, et
P étant une chaîne polymère, qui peut être obtenue par polymérisation anionique d'au moins un diène conjugué et éventuellement d'un ou plusieurs composés vinylaromatiques et qui est éventuellement modifiée au niveau de la terminaison de chaîne,
R¹ étant indépendamment choisi parmi C₁₋₁₁-alkyle, C₆₋₁₁-aryle, C₇₋₁₁-aralkyle et C₂₋₁₁-dialkyléther, préférablement C₁₋₁₁-alkyle, particulièrement préférablement C₁₋₈-alkyle,
R² étant indépendamment choisi parmi H, C₁₋₁₁-alkyle, C₆₋₁₁-aryle, C₇₋₁₁-aralkyle, C₂₋₁₁-dialkyléther et -SiR³R⁴R⁵, dans lequel R³, R⁴ et R⁵ sont indépendamment choisis parmi H, C₁₋₁₆-alkyle, C₆₋₁₆-aryle et C₇₋₁₆-aralkyle, et R² étant préférablement choisi indépendamment parmi H et - SiR³R⁴R⁵, dans lequel R³, R⁴ et R⁵ sont indépendamment choisis parmi H, C₁₋₁₆-alkyle, C₆₋₁₆-aryle et C7-16-aralkyle, et
n étant un nombre entier, choisi parmi 1 à 200, préférablement 1 à 100, particulièrement préférablement 1 à 50,
le(s) groupe(s) -S-R¹-S-R² étant lié(s) à la chaîne principale de la chaîne polymère P.

2. Mélange de caoutchouc selon la revendication 1, **caractérisé en ce que** l'au moins un diène conjugué est choisi dans le groupe constitué par le 1,3-butadiène, le 2-(C₁₋₅-alkyl)-1,3-butadiène, en particulier l'isoprène (2-méthyl-1,3-butadiène), le 2,3-diméthyl-1,3-butadiène, le 1,3-pentadiène, le 2,4-hexadiène, le 1,3-hexadiène, le 1,3-heptadiène, le 1,3-octadiène, le 2-méthyl-2,4-pentadiène, le cyclopentadiène et le 1,3-cyclooctadiène.

3. Mélange de caoutchouc selon la revendication 2, **caractérisé en ce que** l'au moins un diène conjugué est le 1,3-butadiène.

4. Mélange de caoutchouc selon l'une quelconque des revendications précédentes, **caractérisé en ce que** le composé vinylaromatique est choisi dans le groupe constitué par le styrène, le styrène substitué par C₁₋₄-alkyle, en particulier le 2-méthylstyrène, le 3-méthylstyrène, le 4-méthylstyrène, le 2,4-diméthylstyrène, le 2,4,6-triméthylstyrène, l'a-méthylstyrène, le 2,4-diisopropylstyrène et le 4-tert-butylstyrène, le stilbène, la vinylbenzyldiméthylamine, le (4-vinylbenzyl)diméthylaminoéthyléther, le N,N-diméthylaminoéthylstyrène, le tert-butoxystyrène, la vinylpyridine ainsi que des composés divinylaromatiques, en particulier le 1,2-divinylbenzène, le 1,3-divinylbenzène et le 1,4-divinylbenzène, et un mélange de deux de ceux-ci ou plus.

5. Mélange de caoutchouc selon la revendication 4, **caractérisé en ce que** le composé vinylaromatique est le styrène.

6. Mélange de caoutchouc selon l'une quelconque des revendications précédentes, **caractérisé en ce que** la charge est au moins une silice et/ou au moins une suie.

7. Mélange de caoutchouc selon l'une quelconque des revendications précédentes, **caractérisé en ce que** le mélange de caoutchouc contient 20 à 300 phr d'au moins une charge.

8. Mélange de caoutchouc selon l'une quelconque des revendications précédentes, **caractérisé en ce qu'**il contient 40 à 90 phr du polymère A et 10 à 60 phr d'au moins un autre caoutchouc.

9. Mélange de caoutchouc selon la revendication 8, **caractérisé en ce que** l'au moins un autre caoutchouc est un caoutchouc de diène, qui est choisi dans le groupe constitué par un polyisoprène naturel, un polyisoprène synthétique, un caoutchouc de butadiène et un caoutchouc de styrène-butadiène.

10. Vulcanisat, qui est obtenu par vulcanisation au soufre d'au moins un mélange de caoutchouc selon l'une quelconque des revendications 1 à 9.

11. Pneu de véhicule **caractérisé en ce qu'**il contient au moins un vulcanisat d'au moins un mélange de caoutchouc selon la revendication 10 dans au moins un composant.
